# EUROPÄISCHE PATENTSCHRIFT

(11) **EP 1 742 982 B1**
(45) Veröffentlichungstag und Bekanntmachung des Hinweises auf die Patenterteilung: **24.03.2010**
(21) Anmeldenummer: 04797577.6
(22) Anmeldetag: 04.11.2004
(51) Int. Cl.: C08G 63/78, B01J 19/32

(54) **VERFAHREN ZUR HERSTELLUNG VON POLYESTERN**
METHOD FOR THE PRODUCTION OF POLYESTERS
PROCEDE DE PRODUCTION DE POLYESTERS

(30) Priorität: 23.04.2004 DE 102004019810
(43) Veröffentlichungstag der Anmeldung: 17.01.2007
(73) Patentinhaber: Lurgi Zimmer GmbH, 60295 Frankfurt am Main (DE)
(72) Erfinder: DEISS, Stefan, 55296 Harxheim (DE); KIRSTEN, Klaus, 55130 Mainz (DE); JANKO, Lutz, 64390 Erzhausen (DE); RAU, Mike, 50935 Köln (DE)
(74) Vertreter: Meyer-Dulheuer, Karl-Hermann
(86) Internationale Anmeldenummer: PCT/EP2004/012446
(87) Internationale Veröffentlichungsnummer: WO 2005/113635

(56) Entgegenhaltungen:
- DE-A1- 2 243 024
- US-A- 3 167 531
- US-A- 4 214 072
- US-A- 5 254 719
- US-B1- 6 180 817

## Beschreibung

Die vorliegende Erfindung betrifft ein Verfahren zur Herstellung von thermoplastischen Polyestern.

Verfahren zur Herstellung von thermoplastischen Polyestern, insbesondere hochmolekularer Polyester zur Herstellung von Fasern, Folien, Flaschen, Verpackungsmaterial sind bekannt. Als Ausgangsverbindungen werden Dicarbonsäuren oder deren Ester und bifunktionelle Alkohole eingesetzt, die in einer Schmelze umgesetzt werden. Im ersten Reaktionsschritt werden diese zu Monoestem, Diestern und Oligoestern ver- oder umgeestert. Der nächste Verfahrensschritt ist eine Vor- oder Präpolykondensation, bei dem unter vermindertem Druck unter Abspaltung von Kondensationsprodukten wie Wasser und Alkohol längere Ketten aufgebaut werden. Die Viskosität der Schmelze nimmt im Laufe dieses Verfahrensschritts allmählich zu. An diesen Verfahrensschritt schließt sich eine Polykondensation an, in der unter stark reduziertem Druck (Vakuum) ein weiterer Kettenaufbau mit deutlicher Viskositätssteigerung erfolgt. Sowohl in der Vorkondensation als auch in der Polykondensation ist es wichtig, dass die entstehenden niedermolekularen Kondensationsprodukte und die freiwerdenden Monomeren möglichst schnell aus dem Reaktionsgemisch entfernt werden, d.h. aus der flüssigen Phase rasch in die Gasphase gelangen. Das kann in Abhängigkeit von der Viskosität grundsätzlich durch Rühren und/oder eine gezielte Oberflächenvergrößerung unter gleichzeitiger Druckverminderung bis hin zum Vakuum erreicht werden. So werden z.B. für die Vorkondensationsstufe, in der immer noch erhebliche Kondensatmengen anfallen, überwiegend Rührkessel eingesetzt, weil die Viskosität noch relativ gering ist, durch die ausgasenden niedermolekularen Produkte eine zusätzliche Durchmischung erfolgt und Rührkessel auch für Unterdruck zu den Standardapparaturen zählen. Trotzdem hat es nicht an Versuchen gefehlt, den Rührkessel durch andere Vorrichtungen zu ersetzen, um dessen Nachteile wie längere Diffusionswege infolge des ungünstigen Oberflächen/Volumenverhältnis, Gefahr von Toträumen und ungleichmäßige Verweilzeiten, d.h. breiteres Verweilzeitspektrum, zu vermeiden und um potentielle Störungsquellen wie z.B. Rührerwellendichtungen auszuschließen.

Die EP 918 beschreibt ein Verfahren zur Polykondensation von Polyestern in dünner Schicht. Dort wird ein Vorkondensationsprodukt auf 270 - 340 °C in einem Wärmetauscher erhitzt, um eine dünne Schicht mit entsprechender Diffusion zu erhalten, und unter Vakuum (1,33 mbar) in adiabatischer Arbeitsweise polykondensiert, wobei die Temperatur kontinuierlich um 30 - 50 °C gesenkt wird. Zur Realisation dünner Schichten werden Rohre mit Einbauten wie beheizten geneigten Flächen oder beheizte Rohre unterschiedlichen Durchmessers vorgeschlagen. Nachteilig sind der hohe Regelaufwand für die Beheizung der Rohre, um das geforderte Temperaturgefälle einzuhalten, die vorgesehene Filmbildung an allen Orten sicherzustellen und die Möglichkeit zur Bildung von Toträumen. Außerdem wird nichts dazu gesagt, wie die Bedingungen bei Produktionsschwankungen aufrechtzuerhalten wären.

In der EP 123 377 wird für die Polykondensation eine große Oberfläche erzeugt, indem ein Vorkondensat in einen Verdampfungsreaktor gesprüht wird. Das führt zu einer Polykondensation in fester Phase, wobei das so entstandene Produkt sofort zur Weiterverarbeitung in einen Extruder gespritzt wird. Dieses hauptsächlich für die Herstellung von Polyamiden gedachte Verfahren wurde auch für Polyesterprozesse vorgeschlagen, ohne es durch Beispiele zu untermauern, über einen solchen Einsatz ist nichts bekannt.

Das US-Patent 2 727 882 beschreibt eine Bodenkolonne für die Vorkondensationsstufe des Polyethylenterephthalatprozesses mit besonders ausgestalteten Durchlässen, in der das Produkt aus der Umesterungsstufe von unten nach oben geführt und unter gleichzeitiger Temperaturerhöhung der Druck von Boden zu Boden reduziert wird. Der Anfangsdruck liegt bei ca. 30 - 130 mbar, der Enddruck am Kopf bei 13 mbar, die Temperaturerhöhung liegt zwischen 5 °C und 25 °C. Es wird ausdrücklich gefordert, dass die intrinsische Viskosität (IV) nicht größer als 0,3 sein darf. D.h., dass die Schmelze relativ dünnflüssig sein muss, um das Funktionieren dieser Kolonne zu gewährleisten. Eine etwas höhere Viskosität wird zu einer schlechteren Durchmischung, zu schlechterem Ausgasen von Mono- und Oligomeren und zu nicht gewollten längeren Verweilzeiten führen. Das begrenzt die Einsatzmöglichkeiten für Copolyester und andere Polyester. Über die Aufarbeitung der Brüden wird nichts ausgesagt. Die in US 2 727 882 beschriebene Kolonne wird von unten nach oben betrieben. Deshalb ist sie sehr störanfällig, z. B. bei Durchsatzschwankungen. Im Störfall entleert sich die Kolonne sehr schnell und muss nach Beseitigung der Störung erneut angefahren werden. Derartige Störungen haben große Auswirkungen auf den Betrieb des nachfolgenden Endreaktors und die Produktqualität.

In der EP 346 735 wird eine Kolonne mit Einbauten für die Vorkondensation eingesetzt, die sich durch ein großes Längen/Durchmesserverhältnis (133 bis 80:1) auszeichnet. Der angegebene sehr geringe Querschnitt von 50 mm lässt Zweifel an einer Umsetzung in großtechnische Anlagen zu. Die Durchströmung erfolgt von oben nach unten, die genannten Verweilzeiten sind extrem kurz (< 10 min), der Druck liegt am Eingang bei 500-800 mbar, am Ausgang bei 13 - 0,7 mbar, es werden Temperaturen von 260 - 320°C genannt. Die in der Schrift genannten Einbauten sind Füllkörper wie Raschig- oder Pallringe, die im ersten Drittel eine freie Oberfläche von 0,9 - 1,5 m²/L und in den beiden anderen Dritteln eine Oberfläche von 0,3 - 0,5 m²/L aufweisen sollen. Die im Abscheider freiwerdenden Brüden werden destilliert und die Diole wieder in den Prozess zurückgeführt. Das so erhaltene Vorkondensat wird in einem nächsten Schritt weiter kondensiert bis ein granulierfähiges Produkt erhalten wird, d.h. im Prinzip eine zweite Vorkondensation, oder es wird eine Polykondensation zu hochmolekularen Polyestern angeschlossen.

Die in den Schriften US 2 727 882 und EP 346 735 beschriebenen Apparaturen sind Boden- oder Füllkörperkolonnen, die die für ihre Kolonnenart typischen Vor- und Nachteile aufweisen. So zeichnet sich die Bodenkolonne, wie auch im Patent besonders hervorgehoben, durch guten Austausch auf den einzelnen Böden aus, aber sowohl die längere Verweilzeit als auch die limitierende Viskosität sind sehr nachteilig, insbesondere wenn Copolyester oder andere Polyester wie z.B. PTT oder PBT hergestellt werden sollen. Es besteht die Gefahr, dass durch längere Verweilzeiten Nebenreaktionen wie die Bildung von Allylalkohol und Acrolein beim PTT oder die Bildung von Tetrahydrofuran beim PBT begünstigt werden. Außerdem ist für den Betrieb der Bodenkolonne von unten nach oben eine deutlich erhöhte Diolmenge erforderlich. Dies ist energetisch sehr ungünstig und verstärkt die Bildung von Nebenprodukten. Die Füllkörperkolonne hat zwar die Vorteile einer kürzeren Verweilzeit, aber eine Übertragung der in der Schrift angegebenen Größen auf großtechnische Prozesse wird schwierig sein.

DE 2243024 A1 beschreibt eine Vorrichtung zur kontinuierlichen Herstellung von hochmolekularem Polyethylenterephthalat, die es ermöglicht, dass die Polykondensationsreaktion in dünnen Schichten in mehreren Stufen durchgeführt wird und die Polykondensationsprodukte nach jeder Stufe erneut durchmischt werden. Dazu ist in der Mitte des Behälters eine in Teilen als fördernde Extruderwelle ausgebildete Welle senkrecht angeordnet, um die eine Anzahl von senkrechten, feststehenden Stoffaustauschblechen vorgesehen ist.

Zusammengefasst lässt sich feststellen, dass die in den oben aufgeführten Schriften vorgeschlagenen Lösungen keine beziehungsweise nur wenig überzeugende Alternativen zum konventionellen, vielseitig einsetzbaren und verfahrenstechnisch robusten Rührkessel darstellen.

Es war deshalb die Aufgabe gestellt, ein Verfahren zur kontinuierlichen und diskontinuierlichen Herstellung von linearen thermoplastischen Polyestern zu finden, bei dem die Vorkondensation in einer Kolonne durchgeführt wird und die Nachteile der bekannten Lösungen vermieden werden.

Diese Aufgabe wird durch ein Verfahren zur kontinuierlichen und diskontinuierlichen Herstellung von linearen thermoplastischen Polyestern gelöst, in dem man ein Um- oder Veresterungsprodukt unter vermindertem Druck von oben nach unten durch eine Kolonne führt, dadurch gekennzeichnet, dass diese Kolonne aus mehreren Schüssen mit strukturierten Packungen besteht und dass jeder Schuss mit einem Flüssigkeitsverteiler, einem Brüdenabzug und am Boden mit einem Produktabzug versehen ist.

Kolonnen mit strukturierten Packungen werden seit den siebziger Jahren des vorigen Jahrhunderts großtechnisch eingesetzt, d.h. sie waren auch den Erfindern des EP 346 735 bekannt. Überraschenderweise ist nichts über einen Einsatz in Polyesterprozessen bekannt, obwohl sie große technologische Vorteile bieten. Sie vereinigen quasi die Vorteile von Boden- und Füllkörperkolonne ohne deren Nachteile. Sie bieten große Oberflächen, geringe Druckverluste, kurze Verweilzeiten, weniger Toträume, variable Durchmesser, variable Flüssigkeitsbeladung, schnellere Reaktion durch kurze Diffusionswege und sowohl Effizienz als auch Kapazität werden durch eine gerichtete Flüssigkeits- und Gasführung und durch gezielte Oberflächenvergrößerung noch erheblich gesteigert.

Die Kolonnen mit strukturierten Packungen heben sich besonders in zwei Dingen deutlich von den Kolonnen mit loser Füllkörperschüttung (chaotische Füllung) ab. Zum einen betrifft es die Gleichmäßigkeit der Benetzung der Oberflächen und die Fließgeschwindigkeiten der Flüssigphase auf den Einbauten. Je nach Form und Lage der Füllkörper (z.B. Randzonen, Strömungsprofil) kommt es bei loser Füllkörperschüttung zu unterschiedlichen Fließgeschwindigkeiten und unterschiedlichen Schichtdicken auf den Füllkörpern. Insbesondere bei Flüssigkeiten mit erhöhter Viskosität, wie es bei der Polyesterherstellung der Fall ist, wird dieses Problem wegen der erhöhten Strömungswiderstände verstärkt auftreten. Das führt zu Bereichen mit erheblich längeren Verweilzeiten, in denen sich entweder längere Ketten aufbauen, die zu einem ungleichmäßigeren Produkt führen oder zur Bildung von unter Kolonnenbedingungen nicht mehr auflösbaren Oligomeren oder zur Ablagerung von nicht umgesetzten Monomeren aus der Um- oder Veresterung, die sich durch Anlagerung weiterer Partikel so vergrößern, dass es letztendlich zu einer Verstopfung der Kolonne kommt. Bei Kolonnen mit strukturierten Packungen sind die Oberflächen und die Anstellwinkel der Packungselemente so gestaltet, dass immer eine gleichmäßige Benetzung und gleichmäßige Fließgeschwindigkeiten vorliegen. Damit können Verstopfungen weitestgehend vermieden werden, die Betriebssicherheit beim An- und Abfahren und bei Störungen ist wesentlich höher.

Die gezielte Gestaltung der Oberflächen von strukturierten Packungen führt dazu, dass auch bei kleineren Oberflächen je Volumen dieselbe Wirkung wie mit größeren Oberflächen von Kolonnen mit loser Schüttung erzielt werden kann. Bei unseren Versuchen reichten geringere Oberflächen als in EP 346 735. Um die vorstehend angeführten Vorteile nachhaltig zu erzielen, ist eine gute Flüssigkeitsverteilung am Kopf einer dieser Kolonnen oder eines Schusses notwendig. Solche Flüssigkeitsverteiler sind bekannt, jedoch ohne Beheizung. Da Kolonneneinbauten, wie strukturierte Packungen oder Füllkörper aber praktisch nicht beheizt sind und bei Schmelzeprozessen das Einfrieren der Schmelze eine große Gefahr ist und nicht wie z.B. bei Rührkesseln durch eine Zusatzbeheizung das erstarrte Produkt wieder aufgeschmolzen werden kann, wird für die Flüssigkeitsverteiler eine Beheizungsmöglichkeit vorgesehen. Das gibt auch bei Störungen und unter An- und Abfahrbedingungen größere Sicherheit.

Die obengenannten Besonderheiten einer strukturierten Packung gegenüber einer Füllkörperschüttung oder der andersartigen chaotischen Anordnung von Einbauten wirken sich aber besonders vorteilhaft auf die Produktqualität und Betriebsstabilität aus.
In einer bevorzugten Ausführungsform besteht die Kolonne aus 2 bis 5 Schüssen, wobei jeder Schuss am Boden mit einem Produktabzug ausgerüstet ist, über einen Brüdenabzug verfügt und mit Wärmetauschern versehen werden kann. Die Produktaufgabe erfolgt von oben, die Brüden werden an einer für den jeweiligen Schuss und die Betriebsbedingungen vorteilhaften Position abgezogen und nach Abtrennung der Leichtsieder in den Gesamtprozess zurückgeführt. Der Brüdenabzug kann unterhalb der Packung erfolgen, um z. B. die Gefahr einer unkontrollierten Flutung der Kolonne zu verhindern, oder oberhalb der Packung, um z. B. zusätzliche Oberflächeneffekte durch Gas-Flüssig-Gegenstrom zu erzeugen. Abhängig von den Prozessbedingungen ist auch ein geeigneter Brüdenabzug im mittleren Kolonnenbereich möglich, um die genannten Effekte zu kombinieren.

Als Ausgangsmaterial wird eine Schmelze aus der Veresterung oder Umesterung eingesetzt, die über einen Wärmetauscher auf oder leicht über Betriebstemperatur erwärmt wird und über einen Flüssigkeitsverteiler in den ersten Schuss gegeben wird. Am unteren Ende des Schusses wird die Schmelze gesammelt, ein Teil der Schmelze wieder in den Kopf des Schusses gepumpt, ggf. unter Einsatz eines Wärmetauschers, und der andere Teil der Schmelze wiederum über einen Schmelzeverteiler in den nächsten Schuss geführt oder einer nachfolgenden Prozessstufe zugeführt. Die Betriebstemperaturen liegen zwischen 180 und 350 °C, bevorzugt zwischen 210 und 320 °C, der Betriebsdruck ist gleich oder kleiner als der Atmosphärendruck, bevorzugt zwischen 3 und 600 mbar. Die strukturierten Packungen besitzen eine Oberfläche von 50 - 290 m²/m³, bevorzugt von 100 - 280 m²/m³ und besonders bevorzugt von 150 - 251 m²/m³. Der Anstellwinkel zur Senkrechten beträgt

15 - 65°, bevorzugt von 20 - 60° und besonders bevorzugt von 30 - 45°. Die Ausgestaltung der einzelnen Schüsse, insbesondere Form, Größe und Anstellwinkel der strukturierten Oberfläche, kann sich vorteilhafterweise von Schuss zu Schuss ändern, um sich den verschiedenen Polyestern und den sich ändernden Produkteigenschaften, insbesondere der zunehmenden Viskosität, und den sich ändernden Betriebsbedingungen, wie z. B. Temperatur, Druck, Flüssigbeladung der Packung, Brüdenstrom durch die Packung, anzupassen. Mit dieser Vorgehensweise ist es möglich, für jeden Schuss Flüssigkeitsbeladung, Druck und Temperatur, kurz: den optimalen Betriebspunkt der Kolonne einzustellen.

Es ist somit ein besonderer Vorteil des erfindungsgemäßen Prozesses, dass die verfahrenstechnischen Erfordernisse für einen möglichst raschen Prozess für verschiedenste Polyester mit Hilfe von kompakten und relativ einfach aufgebauten Apparaten umgesetzt werden. Beim An- und Abfahren der Kolonne und bei Störungen bietet das erfindungsgemäße Verfahren außerdem eine deutlich höhere Betriebssicherheit und geringere Abfallmengen.

Die Umsetzung dieses Konzeptes erlaubt es, den Betriebsbereich der Kolonne auf mindestens 30 - 130 % des Anlagendurchsatzes gegenüber den 50 - 110 % des Standes der Technik zu erweitern. Ebenso lassen sich dadurch die Viskosität im Bereich der intrinsischen Viskosität (IV) von IV = 0,2 - 0,4 dL/g und die COOH-Endgruppen von 30 - 150 meq/kg sehr genau einstellen.

Die gezielte Rückführung eines Produktteilstroms in Kombination mit der Kolonne mit strukturierten Packungen erlaubt also eine jedem Polyester angepasste Vorkondensation, die infolge der leicht veränderbaren Rückführung auch noch besonders unempfindlich gegenüber Störungen ist und somit auch gegenüber den bei einem Anlagenbetrieb mit erhöhten Durchsatzanforderungen auftretenden Schwankungen. Dies bedeutet gegenüber den bisherigen Lösungen einen großen verfahrenstechnischen und wirtschaftlichen Fortschritt.

Die Erfindung wird nunmehr an Hand einiger, in keiner Weise einschränkender Ausführungsbeispiele näher beschrieben. Die Versuchsergebnisse der Vergleichsbeispiele und der Beispiele sind in der Tabelle 1 zusammengefasst.

Die angegebenen Eigenschaftswerte wurden wie folgt ermittelt:

Die COOH-Endgruppenkonzentration wurde mittels photometrischer Titration einer Lösung eines Polyestervorproduktes in einem Gemisch aus o-Kresol und Chloroform (70:30 Gew.-Teile) mit 0,05 n ethanolischer Kalilauge gegen Bromthymolblau bestimmt.

Die Verseifungszahl (VZ) wurde durch Verseifung mit Kaliumhydroxid in n-Propanol und photometrische Titration in Dimethylformamid bestimmt.

Die intrinsische Viskosität (IV) wurde bei 25°C an einer Lösung von 500 mg Polyesterzwischenprodukt in 100 mL eines Gemisches aus Phenol und 1,2-Dichlorbenzol (3:2 Gew.-Teile) gemessen.

Der Polymerisationsgrad wurde aus der IV errechnet.

### Vergleichsbeispiel 1

Als Ausgangsmaterial für die Präpolykondensation diente großtechnisch hergestelltes Oligomer aus der 2. Veresterungsstufe einer kontinuierlichen Anlage zur Herstellung von Polyethylenterephthalat. 6,5 kg des Oligomers wurden in einem Extruder aufgeschmolzen und unter Normaldruck in ein Reaktionsgefäß gegeben. Zur Spezifikation des Ausgangszustandes wurde eine Probe gezogen. Anschließend wurde bei einem Druck von 10 mbar und einer Temperatur von 272 °C unter Durchmischung 60 min präpolymerisiert. Zum Vergleich mit herkömmlichen gerührten Präpolyreaktoren wurde der Reaktorinhalt mit einer Umwälzpumpe mit 100 kg/h zirkuliert. Die entstandenen Reaktionsgase wurden durch Regelung des Vakuums auf 10 mbar kontinuierlich entfernt. Nach Versuchsende wurde eine Probe gezogen.

### Beispiel 1

Mit dem gleichen Oligomer, wie in Vergleichsbeispiel 1, wurde eine Präpolykondensation in einer Versuchsapparatur bestehend aus einem Vorlagebehälter, einer Zirkulationsleitung mit Umwälzpumpe und einer Packungskolonne durchgeführt. Die Packungskolonne enthielt strukturierte Packungen mit einer spezifischen Oberfläche von 200 m²/m³ und einem Neigungswinkel zur Senkrechten von 30°. 6,5 kg des Oligomers wurden in einem Extruder aufgeschmolzen und unter Normaldruck in den Vorlagebehälter gegeben. Zur Spezifikation des Ausgangszustandes wurde eine Probe gezogen. Anschließend wurde bei einem Druck von 10 mbar und einer Temperatur von 272 °C unter Durchmischung 60 min präpolymerisiert. Dabei wurde das Oligomer mit einer Umwälzrate von 100 kg/h kontinuierlich aus dem Vorlagebehälter gefördert und von oben auf die Packungskolonne gegeben, deren Ablauf wieder mit dem Vorlagebehälter verbunden war. Die entstandenen Reaktionsgase wurden oberhalb der Packung durch Regelung des Vakuums auf 10 mbar kontinuierlich entfernt. Nach Versuchsende wurde eine Probe gezogen.

Die Präpolymerisation unter Verwendung der Packungskolonne in Beispiel 1 gegenüber Vergleichsbeispiel 1 ergab eine Steigerung der Zunahme des Polymerisationsgrades um ca. 48 % bei sonst gleichen Versuchsbedingungen.

### Vergleichsbeispiel 2

Der Versuch wurde wie in Vergleichsbeispiel 1 beschrieben durchgeführt, jedoch mit einem anderen Oligomer als Ausgangsmaterial.

### Beispiel 2

Mit dem gleichen Oligomer, wie in Vergleichsbeispiel 2, wurde eine Präpolykondensation in der in Beispiel 1 beschriebenen Versuchsapparatur auf analoge Weise wie in Beispiel 1 beschrieben durchgeführt. Die Packungskolonne enthielt hier strukturierte Packungen mit einer spezifischen Oberfläche von 250 m²/m³ und einem Neigungswinkel zur Senkrechten von 30°.

Die Präpolymerisation unter Verwendung der Packungskolonne in Beispiel 2 gegenüber Vergleichsbeispiel 2 ergab eine Steigerung der Zunahme des Polymerisationsgrades um ca. 68 % bei sonst gleichen Versuchsbedingungen.

### Vergleichsbeispiel 3

Ein Oligomer wurde bei einem Druck von 10 mbar und einer Temperatur von 269 °C 60 min in einem Reaktionsgefäß präpolymerisiert. Zum Vergleich mit herkömmlichen ungerührten Präpolyreaktoren, bei denen das Produkt langsam in dünnen Schichten von ca. 200 bis 500 mm fließt, wurde eine statische Schichtdicke von ca. 200 mm eingestellt. Dazu wurden 3,5 kg des Oligomers verwendet. Die entstandenen Reaktionsgase wurden durch Regelung des Vakuums auf 10 mbar kontinuierlich entfernt. Zur Spezifikation des Ausgangszustandes wurde unmittelbar vor Versuchsbeginn eine Probe gezogen. Nach Versuchsende wurde eine weitere Probe gezogen.

### Beispiel 3

Mit dem gleichen Oligomer, wie in Vergleichsbeispiel 3, wurde eine Präpolykondensation in einer Versuchsapparatur bestehend aus einem Vodagebehälter, einer Zirkulationsleitung mit Umwälzpumpe und einer Packungskolonne durchgeführt. Die Packungskolonne enthielt strukturierte Packungen mit einer spezifischen Oberfläche von 250 m²/m³ und einem Neigungswinkel zur Senkrechten von 45°. 6,5 kg des Oligomers wurden in einem Extruder aufgeschmolzen und unter Normaldruck in den Vorlagebehälter gegeben. Zur Spezifikation des Ausgangszustandes wurde unmittelbar vor Versuchsbeginn eine Probe gezogen. Anschließend wurde bei einem Druck von 10 mbar und einer Temperatur von 269 °C unter Durchmischung 60 min präpolymerisiert. Dabei wurde das Oligomer mit einer Umwälzrate von 100 kg/h kontinuierlich aus dem Vodagebehälter gefördert und von oben auf die Packungskolonne gegeben, deren Ablauf wieder mit dem Vorlagebehälter verbunden war. Die entstandenen Reaktionsgase wurden unterhalb der Packung durch Regelung des Vakuums auf 10 mbar kontinuierlich entfernt. Nach Versuchsende wurde eine Probe gezogen.

Die Präpolymerisation unter Verwendung der Packungskolonne in Beispiel 3 gegenüber Vergleichsbeispiel 3 ergab eine Steigerung der Zunahme der Kettenlänge um ca. 117 % bei sonst gleichen Versuchsbedingungen.

**Tabelle 1: Versuchsergebnisse**

| | Reaktionszeit | COOH-Endgr. | Intr. Viskosität | Verseifungszahl | Polym.-Grad | Sb-Gehalt |
|---|---|---|---|---|---|---|
| | min | meq/kg | dL/g | KOH g/kg | | ppm |
| Vgl.-Bsp. | 0 | 279 | 0.135 | 570 | 8.7 | 205 |
| 1 | 60 | 91 | 0.253 | 582 | 22.8 | 205 |
| Bsp.1 | 0 | 231 | 0.132 | 568 | 8.4 | 205 |
| | 60 | 67 | 0.297 | 579 | 29.2 | 205 |
| Vgl.-Bsp. | 0 | 163 | 0.125 | 572 | 7.6 | 212 |
| 2 | 60 | 49 | 0.217 | 578 | 18.0 | 212 |
| Bsp.2 | 0 | 205 | 0.121 | 565 | 7.3 | 213 |
| | 60 | 52 | 0.267 | 575 | 24.8 | 213 |
| Vgl.-Bsp. | 0 | 110 | 0.118 | 560 | 7.0 | 185 |
| 3 | 60 | 32 | 0.186 | 572 | 14.2 | 185 |
| Bsp. 3 | 0 | 143 | 0.116 | 560 | 6.8 | 186 |
| | 60 | 36 | 0.250 | 578 | 22.4 | 186 |

## Patentansprüche

1. Verfahren zur kontinuierlichen und diskontinuierlichen Herstellung von thermoplastischen Polyestern, in dem man ein Um- oder Veresterungsprodukt unter vermindertem Druck von oben nach unten durch eine Kolonne führt, **dadurch gekennzeichnet, dass** diese Kolonne aus mehreren Schüssen mit strukturierten Packungen besteht und dass jeder Schuss mit einem Flüssigkeitsverteiler, einem Brüdenabzug und am Boden mit einem Produktabzug versehen ist.

2. Verfahren nach Anspruch 1, **dadurch gekennzeichnet, dass** die strukturierten Packungen eine Oberfläche von 50 - 290 m²/m³, bevorzugt von 100 - 280 m²/m³ und besonders bevorzugt von 150 - 251 m²/m³ und Anstellwinkel zur Senkrechten von 15 - 65°, bevorzugt von 20 - 60°, besonders bevorzugt von 30 - 45° besitzen.

3. Verfahren nach Anspruch 1, **dadurch gekennzeichnet, dass** die Flüssigkeitsverteiler beheizt werden können.

4. Verfahren nach Anspruch 1, **dadurch gekennzeichnet, dass** ein Teil des Produktstromes über einen Wärmetauscher in den Kopf des Schusses zurückgeführt wird.

## Claims

1. A method for the continuous and discontinuous production of thermoplastic polyesters by directing a transesterification or esterification product top down through a column under reduced pressure, **characterized in that** this column consists of several units with structured packings and that each unit is equipped with a liquid distributor, a vapor escape, and at the bottom with a product outlet.

2. A method according to claim 1, **characterized in that** the structured packings have a surface area of 50 - 290 m²/m³, preferably of 100 - 280 m²/m³, and most preferably of 150 - 251 m²/m³, and an angle of inclination with respect to the vertical of 15 - 65 °, preferably of 20 - 60 °, and most preferably of 30 - 45 °.

3. A method according to claim 1, **characterized in that** the fluid distributors can be heated.

4. A method according to claim 1, **characterized in that** a portion of the product stream is returned via a heat exchanger to the head of the unit.

## Revendications

1. Procédé de fabrication continue et discontinue de polyesters thermoplastiques, dans lequel un produit de transestérifation ou d'estérification est acheminé de haut en bas à travers une colonne, **caractérisé en que** ladite colonne est constituée de plusieurs segments pourvus de garnissages structurés et que chaque segment est muni d'un distributeur de liquide, d'un dispositif d'évacuation des vapeurs et d'un dispositif de récupération du produit de fond.

2. Procédé selon la revendication 1, **caractérisé en ce que** lesdits garnissages structurés présentent une surface comprise entre 50 et 290 m²/m³, de préférence entre 100 et 280 m²/m³ et, avec une préférence particulière, entre 150 et 251 m²/m³ ainsi qu'un angle d'inclinaison, par rapport à la verticale, compris entre 15 et 65°, de préférence entre 20 et 60° et, avec une préférence particulière, entre 30 et 45°.

3. Procédé selon la revendication 1, **caractérisé en ce que** lesdits distributeurs de liquide peuvent êtres chauffés.

4. Procédé selon la revendication 1, **caractérisé en ce qu'**une partie du flux de produit est réintroduite dans la tête du segment, en passant à travers un échangeur de chaleur.
